# EUROPEAN PATENT APPLICATION

(11) **EP 4 206 349 A1**
(43) Date of publication of application: **05.07.2023**
(21) Application number: 21860560.8
(22) Date of filing: 30.08.2021
(51) Int. Cl.: C22C 38/02, C22C 38/04, C22C 38/06, C22C 38/12

(54) **980 MPA-GRADE FULL-BAINITE ULTRA-HIGH HOLE EXPANSION STEEL AND MANUFACTURING METHOD THEREFOR**

(30) Priority: 31.08.2020 CN 202010896458
(71) Applicant: BAOSHAN IRON & STEEL CO., LTD., Shanghai 201900 (CN)
(72) Inventor: WANG, Huanrong, Shanghai 201900 (CN); YANG, Feng, Shanghai 201900 (CN); ZHANG, Chen, Shanghai 201900 (CN); YANG, Ana, Shanghai 201900 (CN); NI, Yaping, Shanghai 201900 (CN)
(74) Representative: Kuhnen & Wacker Patent- und Rechtsanwaltsbüro PartG mbB
(86) International application number: PCT/CN2021/115419
(87) International publication number: WO 2022/042728

(57) **Abstract**

A 980 MPa-grade full-bainite ultra-high hole expansion steel and a manufacturing method therefor. The hole expansion steel has the following chemical compositions in percentage by weight: 0.05-0.10% of C, Si≤2.0%, 1.0-2.0% of Mn, P<0.02%, S≤0.003%, 0.02-0.08% of Al, N<0.004%, 0.1-0.5% of Mo, 0.01-0.05% of Ti, O≤0.0030%, the remainder being Fe, and other inevitable impurities. The ultra-high hole expansion steel in the present invention has yield strength ≥800 MPa, tensile strength ≥980 MPa, and a hole expansion rate up to 60% or more, and can be applied in the parts of chassis components such as a control arm and an auxiliary frame, which require high strength thinning and complex forming, of passenger vehicles.

## Description

### Technical Field

The present disclosure pertains to the field of high-strength steel, and in particular relates to a 980 MPa-grade fully bainitic ultra-high-hole-expandability steel, and a manufacturing method for the same.

### Background Art

Along with the development of the national economy, the production of automobiles has increased significantly, and the consumption of plates has also continued to increase. In the domestic automobile industry, the use of hot-rolled or pickled plates is required by the early design of components and parts of many types of vehicles, such as chassis parts, torsion beams, car sub-frames, wheel spokes and rims, front and rear axle assemblies, body structural parts, seats, clutches, seat belts, truck box panels, protective nets, automotive beams and other spare parts. Chassis steel accounts for 24-34% of the total steel consumption of a car.

Weight reduction of passenger vehicles is not only a development trend in the automotive industry, but also a requirement of the laws and regulations. Fuel consumption per hundred kilometers is restricted by the laws and regulations. This is actually a disguised requirement to reduce the weight of the vehicle body, and in turn, the materials are required to have higher strength, smaller thickness and lower weight. Higher strength and lower weight will certainly be requirements of new model vehicles in the future. This will inevitably lead to use of steel of higher grades, and also change in chassis structure. For example, parts will be more complex. As such, improvements are necessary in the performances and surface quality of materials, as well as forming technologies, such as hydroforming, hot stamping, laser welding, etc. In turn, the strength, stamping performance, flanging performance, resilience, fatigue resistance and other performances of the materials need to be improved.

The high-strength and high-hole-expandability steel developed in China not only has relatively low strength compared with that developed in foreign countries, but also has poor performance stability. For example, the high-hole-expandability steel used by domestic auto parts companies is basically high-strength steel having a tensile strength of 600 MPa or less, and the competition in the market of high-hole-expandability steel of the 440 MPa grade or lower is red hot. Nowadays, the high-hole-expandability steel having a tensile strength of 780 MPa starts to be used gradually on a large scale. However, higher requirements are also imposed on two important indicators in the forming process, namely elongation and hole expansion ratio. Unfortunately, 980 MPa-grade high-hole-expandability steel is still in the stage of R&D and validation, and has not yet reached the stage of mass use. However, the 980 MPa-grade high-hole-expandability steel having higher strength and ultra-high hole expansion ratio is an inevitable development trend in the future. In order to better meet the potential needs of users, it is necessary to develop a 980 MPa-grade high-hole-expandability steel having excellent hole expandability.

So far, most of the relevant patent documents are directed to high-hole-expandability steel of the 780 MPa grade and lower. There are very few literatures related to 980 MPa-grade high-hole-expandability steel. Chinese Patent Publication CN106119702A discloses a 980 MPa-grade hot-rolled high-hole-expandability steel. The main characteristic of the design of its composition is a low-carbon V-Ti microalloying design. Its microstructure is granular bainite and a small amount of martensite. At the same time, trace amounts of Nb and Cr are added. It is very different from the present disclosure in terms of composition, process and structure.

As it can be seen from the literatures, the elongation of a material is generally inversely proportional to the hole expansion ratio. That is, the higher the elongation, the lower the hole expansion ratio; conversely, the lower the elongation, the higher the hole expansion ratio. Hence, it is very difficult to obtain a high-hole-expandability steel having high elongation and high hole expandability on the one hand, and high strength on the other hand. In addition, under the same or similar strengthening mechanism, the higher the strength of the material, the lower the hole expansion ratio.

In order to obtain a steel having both good plasticity and good hole expandability/flanging ability, a better balance between them is required. Of course, the hole expansion ratio of a material is closely related with many factors, among which the most important factors include the uniformity of the structure, the level at which inclusions and segregation are controlled, different structure types, the measurement of the hole expansion ratio, and the like. Generally speaking, a single uniform structure is beneficial to obtain a higher hole expansion ratio, while a dual-phase or multiphase structure is usually not beneficial to increase the hole expansion ratio.

### Summary

One object of the present disclosure is to provide a 980 MPa-grade fully bainitic ultra-high-hole-expandability steel, and a manufacturing method for the same. The high-hole-expandability steel has a yield strength of ≥800 MPa, a tensile strength of ≥980 MPa, and a hole expansion ratio of 60% or higher. It can be used for some parts of a chassis of a passenger vehicle, such as a control arm and a sub-frame, which require higher strength and smaller thickness or involve complex shaping.

To achieve the above object, the technical solution of the present disclosure is as follows:
In the compositional design according to the present disclosure, a relatively low C content is employed to ensure that the steel has excellent weldability during use, and ensure that the bainite structure obtained provides excellent matching between strength and hole expansion ratio.

Particularly, the 980 MPa-grade fully bainitic ultra-high-hole-expandability steel according to the present disclosure comprises the following chemical components in weight percentages: C 0.05-0.10%, Si≤2.0%, Mn 1.0-2.0%, P<0.02%, S≤0.003%, Al 0.02-0.08%, N<0.004%, Mo 0.1-0.5%, Ti 0.01-0.05%, and a balance of Fe and other unavoidable impurities.

Further, it also comprises one or more elements selected from Cr<0.5%, B≤0.002%, Ca<0.005%, Nb<0.06%, V<0.05%, Cu<0.5%, Ni<0.5%, wherein Nb and V each preferably have a content of <0.03%. In some embodiments, the 980 MPa-grade fully bainitic ultra-high-hole-expandability steel according to the present disclosure comprises Cr and/or B, wherein Cr preferably has a content of 0.20-0.50%, and B preferably has a content of 0.0005-0.002%. Cu and Ni each preferably have a content of <0.3%; Cr preferably has a content of 0.2-0.4%; B preferably has a content of 0.0005-0.0015%; and Ca preferably has a content of <0.002%.

In some embodiments, the 980 MPa-grade fully bainitic ultra-high-hole-expandability steel according to the present disclosure comprises the following chemical components in weight percentages: C 0.05-0.10%, Si≤2.0%, Mn 1.0-2.0%, P<0.02 %, S<0.003%, Al 0.02-0.08%, N<0.004%, Mo 0.1-0.5%, Ti 0.01-0.05%, Cr<0.5%, B≤0.002%, Ca<0.005%, Nb<0.06%, V ≤ 0.05%, Cu<0.5%, Ni<0.5%, and a balance of Fe and other unavoidable impurities, wherein the fully bainitic ultra-high-hole-expandability steel at least comprises one or more elements selected from Cr, B, Ca, Nb, V, Cu and Ni, and preferably at least comprises Cr and/or B.

Preferably, C has a content of 0.06-0.09%. Preferably, Mn has a content of 1.4-1.8%. Preferably, S is controlled to have a content of 0.0015% or lower. Preferably, Al has a content of 0.02-0.05%. Preferably, N is controlled to have a content of 0.003% or lower. Preferably, Ti has a content of 0.01-0.03%. Preferably, Mo has a content of 0.15-0.35%. Preferably, O is controlled to have a content within 30ppm. Preferably, Si has a content of 0.05-2.0%.

The ultra-high-hole-expandability steel according to the present disclosure has a microstructure of full bainite.

The ultra-high-hole-expandability steel according to the present disclosure has a yield strength of ≥800 MPa, preferably ≥830 MPa, more preferably ≥850 MPa, more preferably ≥880 MPa, a tensile strength of ≥980 MPa, preferably ≥1000 MPa, more preferably ≥1020 MPa, a transverse elongation A₅₀ of ≥10 %, a hole expansion ratio of ≥ 60%, preferably ≥ 70%, and has passed cold bending test (d ≤ 4a, 180°).

Preferably, the ultra-high-hole-expandability steel according to the present disclosure has an impact toughness at -40°C of ≥40 J, preferably ≥50 J, more preferably ≥60 J. In a particularly preferred embodiment, the ultra-high-hole-expandability steel according to the present disclosure has an impact toughness at -40°C of ≥70J.

In a preferred embodiment, the ultra-high-hole-expandability steel according to the present disclosure has a yield strength of ≥ 850 MPa, a tensile strength of ≥ 1020 MPa, a transverse elongation A₅₀ of ≥ 10%, a hole expansion ratio of ≥ 70%, and an impact toughness at -40°C of ≥ 50 J, and has passed cold bending test (d≤4a, 180°).

In a further preferred embodiment, the ultra-high-hole-expandability steel according to the present disclosure has a yield strength of ≥ 830 MPa, a tensile strength of ≥ 1000 MPa, a transverse elongation A₅₀ of ≥ 10%, a hole expansion ratio of ≥ 70%, and an impact toughness at -40°C of ≥ 60J, and has passed cold bending test (d≤4a, 180°).

In a further preferred embodiment, the ultra-high-hole-expandability steel according to the present disclosure has a yield strength of ≥ 900 MPa, a tensile strength of ≥ 1040 MPa, a transverse elongation A₅₀ of ≥ 10%, a hole expansion ratio of ≥ 65%, and an impact toughness at -40°C of ≥ 40J, and has passed cold bending test (d≤4a, 180°).

In the compositional design of the ultra-high-hole-expandability steel according to the present disclosure:
Carbon: Carbon is an essential element in the steel, and it's also one of the important elements in the present disclosure. Caron enlarges an austenite phase region and stabilizes austenite. As an interstitial atom in the steel, carbon plays an important role for increasing steel strength, and has the greatest influence on the yield strength and tensile strength of the steel. In the present disclosure, in order to obtain ultra-high strength and ultra-high hole expansion ratio, it is necessary to obtain a uniform monophasic low-carbon bainite structure. In order to obtain a high-strength steel having a tensile strength of the 980 MPa grade, it is necessary to ensure that the carbon content is 0.05% or higher. Otherwise, if the carbon content is below 0.05%, the tensile strength of the bainite structure formed cannot reach 980 MPa. However, the carbon content should not be higher than 0.10%. If the carbon content is too high, a relatively large amount of a martensite-austenite component is likely to appear in the resulting low-carbon bainite structure. This is unfavorable to the elongation and hole expansion ratio. Therefore, the carbon content should be controlled at 0.05-0.10%, preferably at 0.06-0.09%.

Silicon: Silicon is an essential element in the steel, and it's also one of the important elements in the present disclosure. As mentioned earlier, the silicon content has an important influence on the performances of steel, especially the elongation and hole expansion ratio. When the silicon content is low, there is less retained austenite in the structure, and the elongation is relatively low. When the silicon content reaches 0.8% or higher, the content of the retained austenite in the structure increases under the same process conditions, which can help to increase the elongation. Within the silicon content range according to the present disclosure, the variation in silicon content mainly influences the elongation indicator, and has little influence on the hole expansion ratio. Addition of more silicon to the steel tends to increase the load of the rolling mill, and it is also unfavorable to the steel surface. Therefore, in order to improve the surface quality of the steel and reduce the actual rolling force, the Si content in the steel should not be too high, generally not higher than 2.0%. According to different requirements of users in practice, two concepts may be adopted in the compositional design, i.e. the low-silicon concept and the high-silicon concept.

Manganese: Manganese is the most essential element in the steel, and it's also one of the most important elements in the present disclosure. It's well known that Mn is an important element for enlarging the austenite phase region, and it can reduce the critical quenching rate of steel, stabilize austenite, refine grains, and delay transformation of austenite to pearlite. According to the present disclosure, in order to guarantee the strength of the steel plate, the Mn content is generally controlled at 1.0% or higher. At the same time, the Mn content should generally not exceed 2.0%; otherwise, Mn segregation will occur easily during steelmaking, and hot cracking is also prone to occur during continuous casting of the slab. Therefore, the content of Mn in the steel is generally controlled at 1.0-2.0%, preferably 1.4-1.8%.

Phosphorus: Phosphorus is an impurity element in the steel. P has a strong propensity to segregate to grain boundaries. When the P content in the steel is relatively high (≥0.1%), Fe₂P will form and precipitate around the grains, leading to decreased plasticity and toughness of the steel. Therefore, its content should be as low as possible. Generally, it's desirable to control its content within 0.02%, so that the steelmaking cost will not be increased.

Sulfur: Sulfur is an impurity element in the steel. S in the steel often combines with Mn to form MnS inclusions. Particularly, when the contents of both S and Mn are relatively high, a large amount of MnS will form in the steel. MnS has certain plasticity itself, and it will deform in the rolling direction in a subsequent rolling process, so that not only the transverse plasticity of the steel will be degraded, but also the anisotropy of the structure will be increased, which is unfavorable to the hole expandability. Therefore, the S content in the steel should be as low as possible. Considering that the Mn content in the present disclosure must be at a higher level, in order to reduce the MnS content, the S content should be strictly controlled. It's required to control the S content within 0.003%, preferably at 0.0015% or less.

Aluminum: The main role of aluminum in the steel is deoxygenation and nitrogen fixation. In the presence of strong carbide-forming elements such as Ti, Nb, V and the like, the main function of Al is deoxygenation and grain refinement. According to the present disclosure, the content of Al as a common element for deoxygenation and grain refinement is generally controlled at 0.02-0.08%. If the Al content is lower than 0.02%, it cannot achieve the grain refinement effect; if the Al content is higher than 0.08%, the grain refinement effect comes to a plateau. Therefore, the content of Al in the steel is controlled at 0.02-0.08%, preferably 0.02-0.05%.

Nitrogen: Nitrogen is an impurity element in the present disclosure, and its content should be as low as possible. However, nitrogen is an unavoidable element in the steelmaking process. Although its content is low, it can combine with strong carbide-forming elements such as Ti to form TiN particles which have a very adverse influence on the performances of the steel, especially unfavorable to the hole expandability. Due to the square shape of TiN, a large stress concentration exists between its sharp corner and the matrix. During the process of hole expansion deformation, the stress concentration between TiN and the matrix is prone to cause cracking which greatly reduces the hole expandability of the material. Provided that the nitrogen content is controlled at one's best, the contents of strong carbide-forming elements such as Ti should be as low as possible. According to the present disclosure, a trace amount of Ti is added to fix nitrogen, so as to minimize the adverse influence of TiN. Therefore, the nitrogen content should be controlled at 0.004% or lower, preferably at 0.003% or lower.

Titanium: Titanium is one of the important elements in the present disclosure. Ti has primarily two functions in the present disclosure. One is to combine with the impurity element N in the steel to form TiN, so as to play a part in "nitrogen fixation"; and the other one is to form a certain amount of dispersed fine TiN in a subsequent process of welding the material, thereby suppressing the austenite grain size, refining the structure and improving the low temperature toughness. Therefore, the content of Ti in the steel is controlled at 0.01-0.05%, preferably in the range of 0.01-0.03%.

Molybdenum: Molybdenum is one of the important elements in the present disclosure. The addition of molybdenum to the steel can greatly delay the phase transformation of ferrite and pearlite. This effect of molybdenum allows for adjustment of various procedures in the practical rolling process. For example, after the final rolling is completed, staged cooling may be conducted, or air cooling and water cooling may be conducted in sequence. In the present disclosure, the process of air cooling and water cooling in sequence or direct water cooling after rolling is adopted. The addition of molybdenum can ensure that a structure of ferrite or pearlite will not be formed during the air cooling. At the same time, dynamic restoration of the deformed austenite can occur during the air cooling. This helps to improve the structure uniformity. In addition, molybdenum is highly resistant to welding softening. Since the main purpose of the present disclosure is to obtain a single structure of low-carbon martensite with a small amount of retained austenite, and low-carbon martensite tends to soften after welding, the addition of a certain amount of molybdenum can effectively reduce the degree of welding softening. Therefore, the molybdenum content should be controlled at 0.1-0.5%, preferably 0.15-0.35%.

Chromium: Chromium is an optional element in the present disclosure. The addition of a small amount of chromium is not aimed to improve the hardenability of the steel, but to combine with B, which is conducive to formation of an acicular ferrite structure in the welding heat affected zone after welding, thereby greatly improving the low temperature toughness of the welding heat affected zone. Because the steel according to the present disclosure is finally used for parts which are products such as passenger vehicle chassis, the low-temperature toughness of the welding heat affected zone is a very important indicator. In addition to ensuring that the strength of the welding heat affected zone cannot be reduced too much, the low-temperature toughness of the welding heat affected zone must also meet certain requirements. Additionally, chromium itself also exhibits some resistance to welding softening. Therefore, the amount of chromium added to the steel is generally ≤0.5%, preferably in the range of 0.2-0.4%.

Boron: Boron is an optional element in the present disclosure. The main function of boron in the steel is to inhibit formation of proeutectoid ferrite by segregating at the prior austenite grain boundaries. The addition of boron to the steel can also greatly improve the hardenability of the steel. However, according to the present disclosure, the main purpose of adding a trace amount of boron is not to improve the hardenability, but to combine with chromium to improve the structure of the welding heat affected zone, and obtain an acicular ferrite structure having good toughness. The addition of element boron to the steel is generally controlled in an amount of 0.002% or lower, preferably in the range of 0.0005-0.0015%.

Calcium: Calcium is an optional element in the present disclosure. Calcium can improve the shape of sulfides such as MnS. For example, the long strip-shaped MnS and other sulfides are converted to spherical CaS. This helps to improve the shape of inclusions, thereby reducing the adverse influence of long strip-shaped sulfides on hole expandability. However, the addition of calcium in an excessive amount will increase the amount of calcium oxide which is unfavorable for hole expandability. Therefore, the amount of calcium added to the steel is generally ≤0.005%, preferably ≤0.002%.

Oxygen: Oxygen is an unavoidable element in steel making. For the present disclosure, the O content in the steel is generally 30 ppm or lower after deoxygenation, and thus there will be no obvious adverse influence on the performances of the steel plate. Therefore, the content of O in the steel may be controlled within 30 ppm.

Niobium: Niobium is one of the optional elements in the present disclosure. Like titanium, niobium is a strong carbide-forming element in the steel. The addition of niobium to the steel can greatly increase the sub-recrystallization temperature of the steel, help to obtain deformed austenite having a higher dislocation density in the finishing rolling stage, and refine the final phase transformation structure in the subsequent transformation process. However, the addition of too much niobium is undesirable. On the one hand, if the amount of niobium added exceeds 0.06%, it is easy to form relatively coarse niobium carbonitrides in the structure, which consumes some carbon atoms and thus reduces the precipitation strengthening effect of carbides. On the other hand, a high content of niobium further tends to cause anisotropy of the hot-rolled austenite structure. This anisotropy will be passed down to the final structure during the subsequent cooling phase transformation process, which is unfavorable for hole expandability. Therefore, the niobium content in the steel is generally controlled at ≤0.06%, preferably ≤0.03%.

Vanadium: Vanadium is an optional element in the present disclosure. Like titanium and niobium, vanadium is also a strong carbide-forming element. However, the solid solution or precipitation temperature of vanadium carbides is low, and they are usually all dissolved in austenite at the finishing rolling stage. Vanadium carbides begin to form in ferrite only when the temperature is decreased and phase transformation begins. Since the solid solubility of vanadium carbides in ferrite is greater than those of niobium and titanium carbides, vanadium carbides formed in ferrite have a larger size which is not conducive to precipitation strengthening. Hence, vanadium carbides contribute far less to the steel strength than titanium. In addition, the formation of vanadium carbides also consumes a certain amount of carbon atoms. This is unfavorable for improving the steel strength. Therefore, the amount of vanadium added to the steel is generally ≤0.05%, preferably ≤0.03%.

Copper: Copper is an optional element in the present disclosure. The addition of copper to the steel can improve the corrosion resistance of the steel. When it is added together with element P, the effect of corrosion resistance is better. When Cu is added in an amount of greater than 1%, an ε-Cu precipitate phase may form under certain conditions. This precipitate phase has a relatively strong precipitation strengthening effect. However, the addition of Cu tends to cause the phenomenon of "Cu embrittlement" in the rolling process. In order to make full use of the effect of copper in improving corrosion resistance without causing obvious phenomenon of "Cu embrittlement" in some application scenarios, the content of element Cu is generally controlled within 0.5%, preferably within 0.3%.

Nickel: Nickel is an optional element in the present disclosure. The addition of nickel to the steel imparts certain corrosion resistance, but the effect of corrosion resistance is weaker than that of copper. The addition of nickel to the steel has little influence on the tensile performance of the steel, but it can refine the structure and precipitate phase of the steel, thereby greatly improving the low temperature toughness of the steel. At the same time, the addition of a small amount of nickel to the steel with copper added can inhibit the occurrence of "Cu embrittlement". The addition of a relatively higher amount of nickel has no obvious adverse influence on the performances of the steel itself. Concurrent addition of copper and nickel can not only improve the corrosion resistance, but also refine the structure and precipitate phase of the steel, thereby greatly improving the low temperature toughness. However, because copper and nickel are relatively expensive alloying elements, in order to minimize the cost of alloy elements, the amount of nickel added is generally ≤0.5%, preferably ≤0.3%.

The method for manufacturing the 980 MPa-grade fully bainitic ultra-high hole-expandability steel according to the present disclosure comprises the following steps:
1) Smelting, casting
   wherein the above components are subjected to smelting in a converter or electrical furnace, secondary refining in a vacuum furnace, and casting to form a cast blank or ingot;
2) Reheating of the cast blank or ingot, wherein a heating temperature is 1100-1200 °C; and a holding time is 1-2 hours;
3) Hot rolling
   wherein an initial rolling temperature is 950-1100°C; wherein 3-5 passes of heavy reduction rolling is performed at a temperature of 950°C or higher with an accumulated deformation rate of ≥50%, preferably ≥70%, to obtain an intermediate blank, mainly with an aim to refine austenite grains; wherein the intermediate blank is held till 930-950°C, and then subjected to 5-7 passes of finishing rolling with an accumulated deformation rate of ≥70%, preferably ≥80%, wherein a final rolling temperature is 800-930°C;
4) Cooling
   wherein air cooling is performed for 0-10 seconds to allow for dynamic restoration and dynamic recrystallization, and then water cooling is performed, wherein the strip steel is water cooled to a temperature range of bainite transformation, i.e. in the range of Bₛ to Bε, at a cooling rate of ≥10°C/s, preferably 10-60°C/s; wherein after coiling to obtain a steel coil, air cooling (cooling rate > 20°C/h) is utilized to speed up cooling of the steel coil until room temperature; wherein a coiling temperature is preferably 410-550°C;
5) Pickling
   wherein a moving speed of the strip steel is adjusted within a range of 30-100 m/min during pickling; a pickling temperature is controlled at 75-85°C, and a tension leveling rate is controlled at ≤2% to reduce elongation loss of the strip steel; wherein the strip steel is subjected to rinsing at a temperature in a range of 35-50°C, surface drying at a temperature in a range of 120-140°C, and oiling.

Preferably, in step 5), after the pickling, the rinsing is carried out at a temperature in a range of 35-50°C, and the surface of the strip steel is dried at 120-140°C, followed by oiling.

The innovative points of the present disclosure include:
In terms of the compositional design according to the present disclosure, the design concept is based on low-carbon monophase bainite. A suitable final rolling temperature and air cooling or direct water cooling after rolling are employed. After coiling, air cooling or any other mode that can accelerate cooling of the steel coil is utilized to cool the steel coil down to room temperature as quickly as possible. Finally, monophase bainite having a uniform and fine structure is obtained. As such, the strip steel exhibits relatively high plasticity, toughness, good cold bending performance and ultra-high hole expansion ratio.

In terms of the design of the rolling process, at the rough rolling stage and the finishing rolling stage, the rolling procedure shall be completed as quickly as possible. After the finishing rolling is completed, air cooling may be carried out for various periods of time at first. It's also possible to perform laminar cooling directly after the finishing rolling is completed. The main purpose of air cooling is explained as follows: the designed composition comprises relatively high contents of manganese and molybdenum. Manganese is an element that stabilizes austenite, while molybdenum greatly delays phase transformation of ferrite and pearlite. Therefore, during the air cooling for a certain period of time, the deformed austenite in the rolled steel will not undergo phase transformation. That is, no ferrite structure will be formed. Instead, dynamic recrystallization and relaxation will occur. The dynamic recrystallization of the deformed austenite allows for formation of quasi-equiaxed austenite having a uniform structure, and the dislocations in the relaxed austenite grains will be reduced notably. The combination of these two aspects enables obtainment of monophase bainite having a uniform and fine structure in the subsequent water cooling and laminar cooling. In order to obtain the bainite structure, the water-cooling rate of the strip steel is required to be ≥10°C/s.

Since the microstructure involved in the present disclosure is low-carbon bainite, after the final rolling is completed, the strip steel only needs to be cooled to the temperature range of bainite transformation, i.e. in the range of Bₛ to Bε, at a cooling rate ≥ 10°C/s. As the bainite transformation takes a long time, the steel coil still undergoes transformation after coiling. Therefore, in order to obtain a high-strength steel having excellent strength, plasticity and hole expansion ratio, after coiling, it is necessary to cool the steel coil to room temperature as soon as possible by air cooling or any other forced cooling mode (cooling rate>20°C/h, preferably ≥ 25°C/h), so as to obtain a uniform and fine monophase bainite structure. It is based on this innovative concept in the design of the composition and process that the 980 MPa-grade fully bainitic ultra-high-hole-expandability steel having excellent strength, plasticity, toughness, cold bending performance and hole expandability according to the present disclosure is obtained.

The beneficial effects of the present disclosure include:
(1) A 980 MPa-grade ultra-high-hole-expandability steel having excellent strength, plasticity, toughness and hole expandability can be obtained by adopting the design concept of a relatively economical composition and adopting the innovative cooling process.
(2) The steel coil or steel plate exhibits excellent matching of strength, plasticity, toughness and hole expansion ratio, and also has good cold bending performance and hole expandability/flanging ability. It has a yield strength of ≥800 MPa, and a tensile strength of ≥980 MPa. The hot-rolled or pickled ultra-high-hole-expandability steel having a thickness of 2-6 mm has good elongation (transverse A₅₀≥8%), impact toughness and hole expandability (hole expansion ratio≥60%) at the same time, useful for manufacturing complexly-shaped parts such as automobile chassis, sub-frames and the like that require high strength, reduced thickness, hole expansion and flanging, and has a very broad application prospect.

### Description of the Drawings

Fig. 1 is a process flow chart of the method for manufacturing a 980 MPa-grade fully bainitic ultra-high-hole-expandability steel according to the present disclosure.
Fig. 2 is a schematic view showing the rolling process in the method for manufacturing a 980 MPa-grade fully bainitic ultra-high-hole-expandability steel according to the present disclosure.
Fig. 3 is a schematic view showing the cooling process in the method for manufacturing a 980 MPa-grade fully bainitic ultra-high-hole-expandability steel according to the present disclosure.
Fig. 4 is a typical metallographical photo of the ultra-high-hole-expandability steel of Example 3 according to the disclosure.

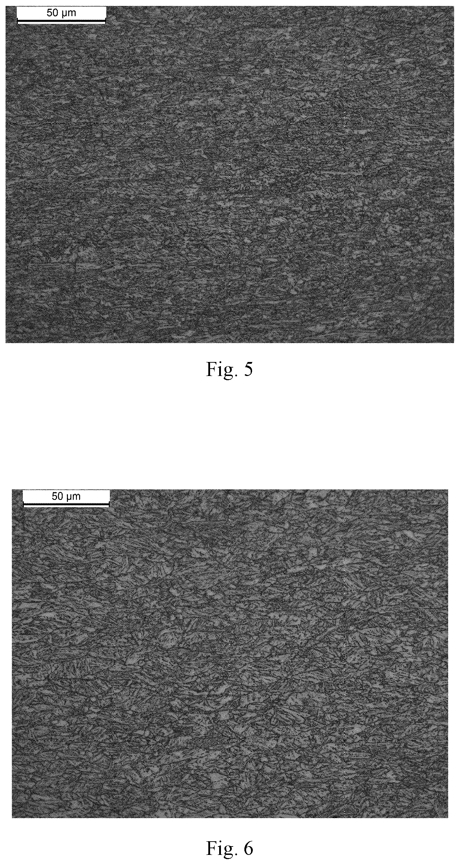

Fig. 5 is a typical metallographical photo of the ultra-high-hole-expandability steel of Example 5 according to the disclosure.
Fig. 6 is a typical metallographical photo of the ultra-high-hole-expandability steel of Example 7 according to the disclosure.

### Detailed Description

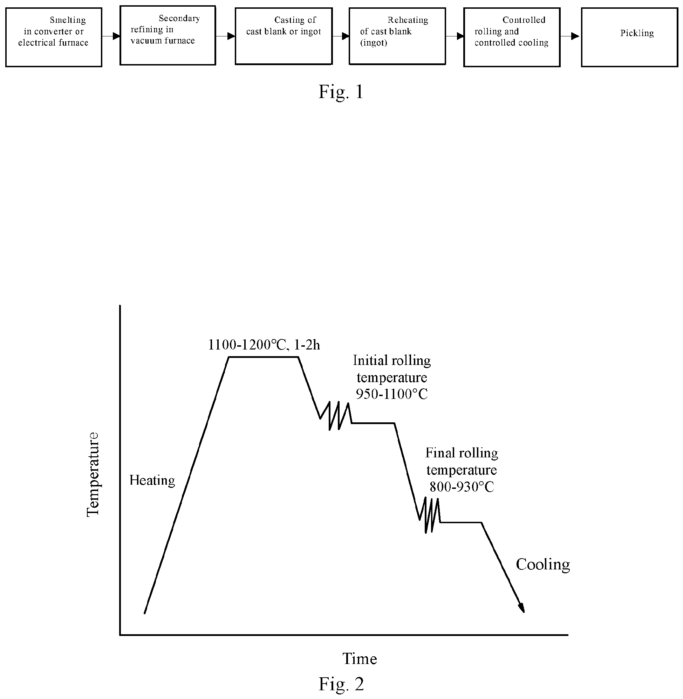

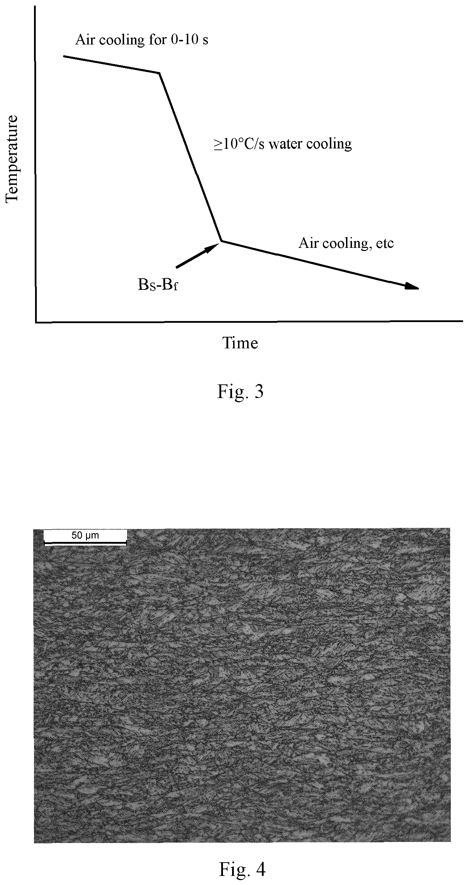

Referring to Fig. 1-Fig. 3, the method for manufacturing the 980 MPa-grade fully bainitic ultra-high hole-expandability steel according to the present disclosure comprises the following steps:
1) Smelting, casting
   wherein the above components are subjected to smelting in a converter or electrical furnace, secondary refining in a vacuum furnace, and casting to form a cast blank or ingot;
2) Reheating of the cast blank or ingot, wherein a heating temperature is 1100-1200 °C; and a holding time is 1-2 hours;
3) Hot rolling
   wherein an initial rolling temperature is 950-1100°C; wherein 3-5 passes of heavy reduction rolling is performed at a temperature of 950°C or higher with an accumulated deformation rate of ≥50% to obtain an intermediate blank; wherein the intermediate blank is held till 930-950°C, and then subjected to 5-7 passes of finishing rolling with an accumulated deformation rate of ≥70%, wherein a final rolling temperature is 800-930°C;
4) Cooling
   wherein air cooling is performed for 0-10 seconds to allow for dynamic restoration and dynamic recrystallization, and then water cooling is performed, wherein the strip steel is water cooled to a temperature range of bainite transformation, i.e. Bₛ to Bε, at a cooling rate of ≥10°C/s; wherein after coiling to obtain a steel coil, air cooling (cooling rate > 20°C/h) is utilized to speed up cooling of the steel coil until room temperature;
5) Pickling
   wherein a moving speed of the strip steel is adjusted within a range of 30-100 m/min during pickling; a pickling temperature is controlled at 75-85°C, and a tension leveling rate is controlled at ≤2%; wherein the strip steel is then subjected to rinsing at a temperature in a range of 35-50°C, surface drying at a temperature in a range of 120-140°C, and oiling.

The compositions of the Examples of the ultra-high-hole-expandability steel according to the present disclosure are shown in Table 1. The production process parameters for the Examples of the steel according to the present disclosure are listed in Table 2 and Table 3, wherein the thickness of the steel blank in the rolling process is 230 mm. The mechanical performances of the Examples of the steel plates according to the present disclosure are listed in Table 4. The tensile performances (yield strength, tensile strength, elongation) were tested in accordance with International Standard ISO6892-2-2018; the hole expansion ratio was tested in accordance with International Standard ISO16630-2017; and the impact energy was tested in accordance with International Standard ISO14556-2015.

As it can be seen from Table 4, the yield strength of the steel coils is ≥800 MPa, while the tensile strength is ≥980 MPa, and the elongation is usually ≥10%. The impact energy is relatively stable. The impact energy at -40°C is ≥40J, and the hole expansion ratio is ≥ 60%. As it can be seen from the above Examples, the 980 MPa high-strength steel according to the present disclosure exhibits excellent matching of strength, plasticity, toughness and hole expandability. It is especially suitable for parts that require high strength, reduced thickness, hole expansion and flanging forming, such as a control arm in an automobile chassis structure. It can also be used for complexly-shaped parts such as wheels that need hole flanging. Therefore, it has broad application prospects.

**Table 1 (unit: weight%)**

| Ex. | C | Si | Mn | P | S | Al | N | Mo | Ti | Cr | B | Ca | Nb | V | Cu | Ni | O |
|---|---|---|---|---|---|---|---|---|---|---|---|---|---|---|---|---|---|
| 1 | 0.055 | 0.08 | 1.48 | 0.013 | 0.0028 | 0.055 | 0.0029 | 0.35 | 0.030 | 0.28 | 0.0010 | 0.002 | / | / | 0.20 | 0.10 | 0.0028 |
| 2 | 0.084 | 1.55 | 1.77 | 0.009 | 0.0010 | 0.040 | 0.0038 | 0.18 | 0.049 | 0.36 | 0.0012 | / | 0.060 | / | / | / | 0.0025 |
| 3 | 0.073 | 0.66 | 1.02 | 0.014 | 0.0020 | 0.079 | 0.0033 | 0.26 | 0.020 | / | 0.0020 | / | / | 0.04 | 0.30 | 0.20 | 0.0022 |
| 4 | 0.090 | 1.08 | 1.67 | 0.010 | 0.0027 | 0.025 | 0.0025 | 0.44 | 0.046 | 0.31 | 0.0015 | 0.001 | / | 0.03 | / | 0.50 | 0.0027 |
| 5 | 0.060 | 0.38 | 1.26 | 0.008 | 0.0012 | 0.052 | 0.0036 | 0.12 | 0.018 | 0.50 | 0.0018 | 0.003 | / | / | / | 0.30 | 0.0026 |
| 6 | 0.098 | 0.22 | 1.83 | 0.011 | 0.0024 | 0.033 | 0.0030 | 0.49 | 0.028 | 0.30 | 0.0005 | / | 0.030 | / | 0.50 | / | 0.0029 |
| 7 | 0.051 | 1.88 | 1.39 | 0.015 | 0.0009 | 0.022 | 0.0034 | 0.25 | 0.035 | 0.32 | 0.0018 | 0.005 | 0.015 | 0.02 | / | / | 0.0021 |
| 8 | 0.077 | 1.24 | 1.99 | 0.009 | 0.0025 | 0.057 | 0.0022 | 0.31 | 0.010 | 0.20 | / | / | / | 0.05 | / | / | 0.0024 |

**Table 2**

| | Heating temperat ure °C | Holdin g time h | Initial rolling temper ature °C | Accumulat ed deformatio n rate during rough rolling % | Intermedia te blank temperatur e °C | Accumulat ed deformatio n rate during finishing rolling % | Final rolling tempera ture °C | Air coolin g time (s) s | Water coolin g rate °C/s | Steel plate thickn ess mm | Coiling temperat ure °C | Cooling rate after coiling °C/h |
|---|---|---|---|---|---|---|---|---|---|---|---|---|
| Ex. 1 | 1160 | 1.3 | 1000 | 90 | 930 | 84 | 860 | 5 | 30 | 3.6 | 450 | 30 |
| Ex. 2 | 1100 | 2.0 | 960 | 70 | 940 | 97 | 800 | 2 | 60 | 2.2 | 500 | 52 |
| Ex. 3 | 1140 | 1.6 | 1080 | 85 | 950 | 87 | 870 | 9 | 10 | 4.5 | 410 | 28 |
| Ex. 4 | 1200 | 1.0 | 1020 | 80 | 935 | 94 | 830 | 0 | 40 | 2.6 | 480 | 43 |
| Ex. 5 | 1120 | 1.9 | 950 | 75 | 940 | 93 | 930 | 3 | 15 | 3.8 | 520 | 58 |
| Ex. 6 | 1180 | 1.1 | 1100 | 83 | 950 | 92 | 850 | 0 | 50 | 3.0 | 430 | 25 |
| Ex. 7 | 1130 | 1.8 | 1050 | 80 | 935 | 88 | 900 | 7 | 25 | 5.5 | 550 | 63 |
| Ex. 8 | 1150 | 1.5 | 980 | 86 | 945 | 85 | 920 | 4 | 55 | 4.8 | 460 | 40 |

**Table 3**

| | Moving speed of strip steel during pickling m/min | Pickling temperature °C | Tension leveling rate % | Rinsing temperature °C | Drying temperature °C |
|---|---|---|---|---|---|
| Ex. 1 | 50 | 82 | 1.2 | 40 | 135 |
| Ex. 2 | 30 | 76 | 1.8 | 35 | 120 |
| Ex. 3 | 55 | 75 | 0.5 | 47 | 128 |
| Ex. 4 | 45 | 80 | 1.6 | 42 | 140 |
| Ex. 5 | 100 | 77 | 0.8 | 50 | 133 |
| Ex. 6 | 85 | 79 | 2.0 | 37 | 125 |
| Ex. 7 | 60 | 81 | 1.4 | 41 | 134 |
| Ex. 8 | 70 | 83 | 1.0 | 38 | 130 |

**Table 4: Mechanical performances of steel plates**

| | Yield strength MPa | Tensile strength MPa | Elongation % | Hole expansion ratio % | -40 °C impact energy J |
|---|---|---|---|---|---|
| Ex. 1 | 913 | 1048 | 11.0 | 65 | 53 |
| Ex. 2 | 960 | 1070 | 11.5 | 83 | 45 |
| Ex. 3 | 967 | 1070 | 10.5 | 90 | 70 |
| Ex. 4 | 902 | 1044 | 11.0 | 70 | 67 |
| Ex. 5 | 885 | 1047 | 11.5 | 77 | 73 |
| Ex. 6 | 838 | 1043 | 10.0 | 68 | 66 |
| Ex. 7 | 832 | 1037 | 10.5 | 75 | 79 |
| Ex. 8 | 858 | 1018 | 11.5 | 80 | 88 |

| | | | | | |
|---|---|---|---|---|---|
| Note: The impact energy is obtained by converting the measured impact energy of a sample having an actual thickness into the impact energy of a standard sample of 10*10*55 mm in proportion based on equivalent effect. | | | | | |

## Claims

1. A 980 MPa-grade fully bainitic ultra-high-hole-expandability steel, comprising the following chemical components in weight percentages: C 0.05-0.10%, Si≤2.0%, Mn 1.0-2.0%, P≤0.02%, S≤0.003%, Al 0.02-0.08%, N<0.004%, Mo 0.1-0.5%, Ti 0.01-0.05%, O≤0.0030%, and a balance of Fe and other unavoidable impurities.

2. The 980 MPa-grade fully bainitic ultra-high-hole-expandability steel according to claim 1, further comprising one or more elements selected from Cr<0.5%, B≤0.002%, Ca<0.005%, Nb<0.06%, V<0.05%, Cu<0.5%, Ni<0.5%, wherein Nb and V each preferably have a content of <0.03%; Cu and Ni each preferably have a content of <0.3%; Cr preferably has a content of 0.2-0.4%; B preferably has a content of 0.0005-0.0015%; and Ca preferably has a content of <0.002%.

3. The 980 MPa-grade fully bainitic ultra-high-hole-expandability steel according to claim 2, further comprising Cr<0.5% and/or B≤0.002%.

4. The 980 MPa-grade fully bainitic ultra-high-hole-expandability steel according to claim 1, wherein C: 0.06-0.09%.

5. The 980 MPa-grade fully bainitic ultra-high-hole-expandability steel according to claim 1, wherein Mn: 1.4-1.8%.

6. The 980 MPa-grade fully bainitic ultra-high-hole-expandability steel according to claim 1, wherein S is controlled to have a content of 0.0015% or lower, and/or N is controlled to have a content of 0.003% or lower.

7. The 980 MPa-grade fully bainitic ultra-high-hole-expandability steel according to claim 1, wherein Al: 0.02-0.05%.

8. The 980 MPa-grade fully bainitic ultra-high-hole-expandability steel according to claim 1, wherein Ti: 0.01-0.03%, and/or Mo: 0.15-0.35%.

9. The 980 MPa-grade fully bainitic ultra-high-hole-expandability steel according to claim 1, wherein the ultra-high-hole-expandability steel has a microstructure of full bainite.

10. The 980 MPa-grade fully bainitic ultra-high-hole-expandability steel according to claim 1 or 9, wherein the ultra-high-hole-expandability steel has a yield strength of ≥800 MPa, a tensile strength of ≥980 MPa, a transverse elongation A₅₀ of ≥10 %, a hole expansion ratio of ≥ 60%, and has passed cold bending test (d ≤ 4a, 180°); preferably, the ultra-high-hole-expandability steel has an impact toughness at -40°C of ≥40 J.

11. The 980 MPa-grade fully bainitic ultra-high-hole-expandability steel according to claim 10, wherein the ultra-high-hole-expandability steel has a yield strength of ≥850 MPa, a tensile strength of ≥1020 MPa, a transverse elongation A₅₀ of ≥10 %, a hole expansion ratio of ≥ 70%, and has passed cold bending test (d ≤ 4a, 180°); wherein the ultra-high-hole-expandability steel has an impact toughness at -40°C of ≥50J.

12. The 980 MPa-grade fully bainitic ultra-high-hole-expandability steel according to claim 10, wherein the ultra-high-hole-expandability steel has a yield strength of ≥830 MPa, a tensile strength of ≥1000 MPa, a transverse elongation A₅₀ of ≥10 %, a hole expansion ratio of ≥ 70%, and has passed cold bending test (d ≤ 4a, 180°); wherein the ultra-high-hole-expandability steel has an impact toughness at -40°C of ≥60J.

13. The 980 MPa-grade fully bainitic ultra-high-hole-expandability steel according to claim 10, wherein the ultra-high-hole-expandability steel has a yield strength of ≥900 MPa, a tensile strength of ≥1040 MPa, a transverse elongation A₅₀ of ≥10 %, a hole expansion ratio of ≥ 65%, and has passed cold bending test (d ≤ 4a, 180°); wherein the ultra-high-hole-expandability steel has an impact toughness at -40°C of ≥40J.

14. A method for manufacturing the 980 MPa-grade fully bainitic ultra-high hole-expandability steel according to any one of claims 1-13, comprising the following steps:
1) Smelting, casting
wherein the components according to any one of claims 1-8 are subjected to smelting in a converter or electrical furnace, secondary refining in a vacuum furnace, and casting to form a cast blank or ingot;
2) Reheating of the cast blank or ingot, wherein a heating temperature is 1100-1200 °C;
and a holding time is 1-2 hours;
3) Hot rolling
wherein an initial rolling temperature is 950-1100°C; wherein 3-5 passes of heavy reduction rolling is performed at a temperature of 950°C or higher with an accumulated deformation rate of ≥50%, preferably ≥70%, to obtain an intermediate blank; wherein the intermediate blank is held till 930-950°C, and then subjected to 5-7 passes of finishing rolling with an accumulated deformation rate of ≥70%, preferably ≥80%, wherein a final rolling temperature is 800-930°C;
(4) Cooling
wherein air cooling is performed for 0-10 seconds to allow for dynamic restoration and dynamic recrystallization, and then water cooling is performed, wherein the strip steel is water cooled to a temperature range of bainite transformation, i.e. in the range of Bₛ to Bε, at a cooling rate of ≥10°C/s, preferably 10-60°C/s; wherein after coiling to obtain a steel coil, air cooling is utilized to cool the steel coil to room temperature; wherein a coiling temperature is preferably 410-550°C;
(5) Pickling
wherein a moving speed of the strip steel is adjusted within a range of 30-100 m/min during pickling; a pickling temperature is controlled at 75-85°C, and a tension leveling rate is controlled at ≤2%; wherein the strip steel is then subjected to rinsing, surface drying, and oiling.

15. The method for manufacturing the 980 MPa-grade fully bainitic ultra-high hole-expandability steel according to claim 14, wherein in step 5), after the pickling, the rinsing is carried out at a temperature in a range of 35-50°C, and the surface of the strip steel is dried at 120-140°C, followed by oiling.
